# EUROPÄISCHE PATENTSCHRIFT

(11) **EP 0 762 113 B1**
(45) Veröffentlichungstag und Bekanntmachung des Hinweises auf die Patenterteilung: **22.02.2006**
(21) Anmeldenummer: 96111145.7
(22) Anmeldetag: 11.07.1996
(51) Int. Cl.: G01N 21/53, G01N 21/15

(54) **Vorrichtung zur Messung der Trübung von Rauchgas**
Device for measuring the turbidity of smoke
Dispositif de mesure de la turbidité de fumée

(30) Priorität: 25.08.1995 DE 19531263
(43) Veröffentlichungstag der Anmeldung: 12.03.1997
(73) Patentinhaber: ROBERT BOSCH GMBH, 70442 Stuttgart (DE)
(72) Erfinder: Mai, Hans, 73035 Goeppingen (DE); Nobis, Guenther, 73240 Wendlingen (DE); Enke, Wolfram, 01307 Dresden (DE); Prischmann, Daniel, 02733 Cunewalde (DE)

(56) Entgegenhaltungen:
- EP-A- 0 444 235
- DE-A- 1 673 230
- US-A- 3 833 305

## Beschreibung

Die Erfindung geht aus von einer Vorrichtung zur Messung der Trübung von Rauchgas,mit einer Sendeeinrichtung zur Erzeugung eines den Rauchgasstrom durchsetzenden Meßstrahles und einer Empfangseinrichtung zur Auswertung der durch die Rauchgastrübung hervorgerufenen Abschwächung des Meßstrahles, wobei der Meßstrahl ein Meßrohr durchdringt, dem in seinem mittleren Bereich über ein Zulaufrohr das Rauchgas zugeführt wird, das sich im Meßrohr in zwei zu den beiden Meßrohrenden hin gerichtete Teilströme aufteilt, die auf die vom Meßstrahl durchsetzten Oberflächenbereiche von Sendeeinrichtung und Empfangseinrichtung gerichtet sind, die jeweils durch einen Spülluftstrom gegen Verschmutzung gesichert werden, wobei die beiden Enden des Meßrohrs jeweils in eine Entspannungskammer münden.

### Stand der Technik

Eine solche Vorrichtung zur Messung der Trübung von Rauchgasen ist aus DE 16 73 230 A bekannt, bei der ein von einer Sendeeinrichtung ausgesandter Messstrahl ein Messrohr durchdringt, dem in seinem mittleren Bereich über ein Zulaufrohr das Rauchgas zugeführt wird, das sich im Messrohr in zwei zu beiden Messrohrenden hin gerichtete Teilströme aufteilt. An dem der Messeinrichtung gegenüberliegenden Rohrende ist eine Empfangseinrichtung angeordnet, wobei sich sowohl die Sendeeinrichtung als auch die Empfangseinrichtung durch einen Spalt von den Öffnungen der Rohrenden entfernt befindet. Durch den Spalt wird ein Spülluftstrom geführt, sodass die Sende- und Empfangseinrichtung vor Verschmutzung gesichert wird. Beim Austreten in den Spalt erfährt das Rauchgas eine Entspannung, sodass der Spülluftstrom wirksam werden kann.

Eine weitere Vorrichtung zur Messung der Trübung von Rauchgas ist aus der EP 0 444 235 A1 bekannt, wie sie zur Abgasuntersuchung von Dieselmotoren verwendet wird. Diese Vorrichtung arbeitet nach dem sogenannten Teilstromprinzip, bei dem das einem Messrohr bevorzugt in der Rohrmitte zugeführte Rauchgas in zweite separate Teilströme aufgeteilt wird, die über die beiden Messrohrenden jeweils auf zugeordnete Messköpfe gerichtet sind. Zum Schutz der Messköpfe vor Verschmutzung werden auch hier Spülluftströme verwendet, welche dem Messkopf in Richtung auf den vom Messstrahl jeweils durchsetzten Oberflächenbereich von hinten her zugeführt werden. Dabei wird über eine Luftleitkappe ein Teil des Spülluftstromes radialsymmetrisch vom Randbereich auf das Zentrum des Oberflächenbereiches gelenkt und strömt von dort um die Achse des Messstrahles herum ab. Ein anderer Teil des Spülstromes wird über eine trichterförmig erweiterte Luftleithülse in die Atmosphäre geleitet, wobei diese Luftleithülse das zugewandte Austrittsende des Messrohres umfasst und einen direkten Rauchgasaustritt in die Atmosphäre bildet. Bei dieser Vorrichtung ist der Aufwand für einen wartungsarmen Betrieb verhältnismäßig groß; auch baut die Vorrichtung in Längsrichtung des Meßrohrs besonders lang. Vor allem aber ist bei dieser Art der Gasstromführungen die Meßlänge für den Meßstrahl nicht genau definiert, was die Genauigkeit der Messungen beeinträchtigen kann, insbesondere wenn niedrige und hohe Abgasgeschwindigkeiten auftreten.

Ferner ist aus der US-PS 3,833,305 eine Vorrichtung zur Messung der Trübung von Rauchgas bekannt, die nach dem sogenannten Vollstromprinzip arbeitet. Hier wird das Rauchgas ohne wesentliche Umlenkungen geradlinig durch einen sogenannten Vollstromadapter hindurchgeführt und kann an dessen Ende unbehindert ins Freie entweichen. Die beiden Meßköpfe für den senkrecht zum Rauchgasstrom geführten Meßstrahl werden hier vor Verschmutzung jeweils durch einen Spülluftkanal geschützt, die jeweils an eine Seite des Vollstromadapters angrenzen. Diese Vorrichtung arbeitet nach dem Vollstromprinzip, bei dem an einer vom Meßstrahl durchdrungenen Blendenöffnung parallel zueinander verlaufende Gasströme vorbeigeführt werden. Bei dieser Vorrichtung, die mit einer genau definierten Meßlänge arbeitet, tritt das Problem der Verschmutzung der Meßköpfe nicht in dem Maße auf wie bei dem sogenannten Teilstromprinzip.

Fernerhin ist aus der EP 0 521 725 A2 eine Vorrichtung zur Abgasuntersuchung von Dieselmotoren nach dem Teilstromprinzip bekannt, bei der an jedem Ende des Meßrohrs nahe einem Meßkopf eine Spülluftdüse sowie eine Auslaßöffnung in der Mantelfläche des Meßrohrs angeordnet sind. Das Problem einer genauen Meßlänge und der Verschmutzung der Meßköpfe ist hier nur unbefriedigend gelöst.

Die Erfindung wird im Anspruch 1 definiert.

### Vorteile der Erfindung

Die erfindungsgemäße Vorrichtung zur Messung der Trübung von Rauchgas mit den kennzeichnenden Merkmalen des Hauptanspruchs hat demgegenüber den Vorteil, daß sie eine einfache und kompakte Bauweise ermöglicht, welche die Meßköpfe für Sendeeinrichtung und Empfangseinrichtung des Meßstrahles wirksam vor Verschmutzung schützt und dadurch einen wartungsarmen Betrieb ermöglicht. Zudem arbeitet die Vorrichtung mit einer genau definierten Meßlänge, so daß sie erhöhten Genauigkeitsanforderungen gerecht wird; dies gilt vor allem bei geringen und hohen Abgasgeschwindigkeiten. Zudem lassen sich die Strömungsverhältnisse über die Entspannungskammer strömungsgünstig ausgestalten, wodurch das Ansprechverhalten der Vorrichtung verbessert wird und Rußablagerungen im Gasweg vermieden werden. Durch die parallele und gleichgerichtete Führung der Ströme für Spülluft und Abgas wird eine Vermischung im Bereich der Blendenöffnung gering gehalten und damit die Meßlänge bei unterschiedlichen Abgasgeschwindigkeiten weitgehend konstant gehalten..

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft für eine sichere und genaue Arbeitsweise der Vorrichtung ist es, wenn gemäß Anspruch 2 die Zuströmung des Rauchgases relativ zur Achse des Meßrohrs leicht exzentrisch erfolgt. Dadurch läßt sich eine günstigere und gleichmäßigere Durchströmung der Meßrohrhälften sowie eine weitere Druckverringerung in der Entspannungskammer erreichen. Weitere vorteilhafte Ausgestaltungen ergeben sich aus den übrigen Ansprüchen, der Beschreibung sowie der Zeichnung.

### Zeichnung

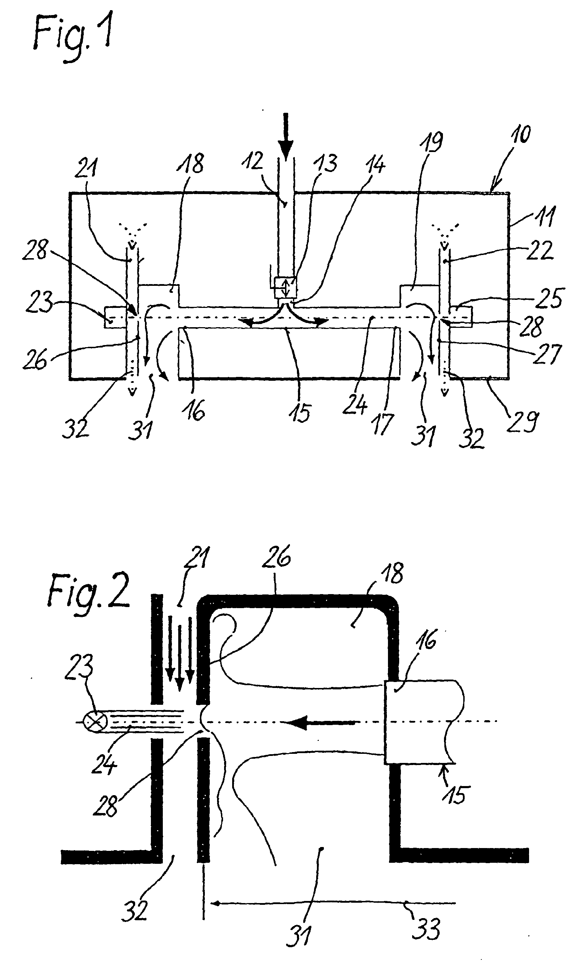

Ein Ausführungsbeispiel der Erfindung ist in der Zeichnung dargestellt und in der nachfolgenden Beschreibung näher erläutert. Es zeigen Figur 1 einen Längsschnitt durch eine Vorrichtung zur Messung der Trübung von Rauchgas in stark vereinfachter Darstellung und Figur 2 als Einzelheit die Entspannungskammer nach Figur 1 mit der Abgasumlenkung in vergrößertem Maßstab.

### Beschreibung des Ausführungsbeispiels

Die Figur 1 zeigt einen Längsschnitt durch eine Vorrichtung 10 zur Messung der Trübung von Rauchgasen in stark vereinfacchter Darstellung. Die Vorrichtung 10, die nach dem sogenannten Teilstromprinzip arbeitet, hat ein Gehäuse 11, in dem über eine Rauchgaszufuhr 12, ein Ventil 13 und ein kurzes Zulaufrohr 14 das zu prüfende Rauchgas in ein Meßrohr 15 geführt wird. Das Zulaufrohr 14 liegt dabei in der Mitte zwischen beiden Meßrohrenden 16, 17, so daß sich das zugeführte Rauchgas in zwei Teilströme zu den beiden Meßrohrenden 16, 17 unterteilt. Jedes Meßrohrende 16, 17 mündet in eine Entspannungskammer 18 bzw. 19, an die jeweils ein Spülluftkanal 21 bzw. 22 angrenzt. An den jeweils außenliegenden Wänden der Spülluftkanäle 21, 22 sind Meßköpfe befestigt, die als Sendeeinrichtung 23 zur Erzeugung eines den Rauchgasstrom durchsetzenden Meßstrahles 24 und als Empfangseinrichtung 25 zur Auswertung der durch die Rauchgastrübung hervorgerufenen Abschwächung des Meßstrahles ausgebildet sind. In jeder einen Spülluftkanal 21, 22 von der benachbarten Entspannungskammer 18 bzw. 19 trennenden Begrenzungswand 26, 27 ist eine Blendenöffnung 28 vorgesehen, durch welche der zwischen den Meßköpfen 23, 25 durch das Meßrohr 15 hindurch verlaufende Meßstrahl 24 hindurchgeht. Jede Entspannungskammer 18, 19 hat am Boden 29 des Gehäuses 11 eine Austrittsöffnung 31, neben der jeweils eine zugeordnete Auslaßöffnung 32 der Spülluftkanäle 21 bzw. 22 liegt.

Da die Entspannungskammern 18, 19 mit ihren zugeordneten Spülluftkanälen 21, 22 in Bezug auf das Zulaufrohr 14 symmetrisch ausgebildet sind, ist in Figur 2 als Einzelheit eine einzelne Entspannungskammer 18 in vergrößertem Maßstabe dargestellt. Wie die Figur 2 in Verbindung mit Figur 1 näher zeigt, hat die Entspannungskammer 18 einen Durchmesser, der mindestens zweimal so groß ist wie der Durchmesser des Meßrohrendes 16. Vorzugsweise liegt dieses Durchmesserverhältnis in einem Bereich vom Zweifachen bis zum Fünfachen des Meßrohrdurchmessers. Die Länge der Entspannungskammer 18 in Richtung des Meßstrahls 24 ist zumindest größer als der Durchmesser des Meßrohrendes 16, wobei sich die Austrittsöffnung 31 über diese gesamte Länge erstreckt. Zweckmäßigerweise hat diese Entspannungskammer 18 die Form eines kreisrunden Zylinders, der koaxial zum Meßrohr 15 angeordnet ist, wobei die Austrittsöffnung 31 in ihrer Größe der Projektion dieses Zylinders auf den Boden 29 entspricht und zwischen Zylinder und Austrittsöffnung 31 zueinander parallele Seitenwände verlaufen. Durch diese Ausbildung der Entspannungskammern 18, 19 können sie eine Vielzahl von Funktionen übernehmen. So wird in der Entspannungskammer 18 der Abgasstrom um 90 Grad umgelenkt, so daß er über die Austrittsöffnung 31 in die Umgebung gelangen kann. Die sprunghafte Erweiterung des Querschnitts am Ende des Meßrohrs 15 führt jeweils zu einer deutlichen Absenkung der Strömungsgeschwindigkeit des Rauchgases. Dadurch wird auch eine Minimierung der kinetischen Energie der Partikelströmung im Rauchgas in Meßrichtung erzielt. Durch die Ausbildung der Entspannungskammer 18 bzw. 19 senkrecht zur Meßrichtung wird erreicht, daß ein gleichmäßiges Abströmen des Abgases in alle Richtungen möglich wird; strömungstechnisch ist dies deswegen günstig, weil hierdurch Ablagerungen in den Gaswegen vermieden werden.

Der an die Entspannungskammer 18 angrenzende Spülluftkanal 21 hat eine möglichst geringe Breite und auch einen geringen Querschnitt, wodurch sich auch ein Fehler bei der optischen Meßlänge gering halten läßt. Der Spülluftkanal 21 erzeugt gleichsam wie ein Kamin eine gerichtete, geradlinig geführte Strömung, so daß die Meßköpfe 23 und 25 zuverlässig gegen Verschmutzung geschützt werden. Durch die Begrenzungswand 26, die sich zwischen Spülluftkanal 21 und Entspannungskammer 18 erstreckt, wird eine möglichst genau definierte Meßlänge 33 in der Vorrichtung 10 erreicht. Die Größe der Blendenöffnung 28 ist dabei zweckmäßigerweise so gewählt, daß ihr Durchmesser zum Durchmesser des Meßrohrendes 16 vorzugsweise ein Verhältnis von eins zu zwei bis eins zu drei ergibt. Der Spülluftkanal 21 hat zweckmäßigerweise einen rechteckigen Querschnitt und seine Auslaßöffnung 32 liegt im Boden 29 neben der Austrittsöffnung 31.

Das Zulaufrohr 14 ist am Meßrohr 15 zentrisch angebracht. Zur Erhöhung der Turbulenz des Abgasstromes erfolgt die Zuströmung in Bezug auf die Längsachse des Meßrohrs 15 leicht exzentrisch.

Die Wirkungsweise der Vorrichtung 10 wird wie folgt erläutert, wobei deren grundsätzliche Funktion als an sich bekannt vorausgesetzt wird. Die Vorrichtung 10 läßt sich zur Messung der Diesel-Abgastrübung auf einer definierten Meßlänge nach dem Durchleuchtungsprinzip verwenden.

Das zu prüfende Abgas wird über die Rauchgaszuführung 12 und das Ventil 13 sowie das Zulaufrohr 14 in das Meßrohr 15 eingeführt. Dabei teilt sich der Abgasstrom zu den Meßrohrenden 16, 17 hin in zwei Teilströme. In dem Meßrohr 15 wird mit Hilfe der Sendeeinrichtung 23 und der Empfangseinrichtung 25 über die Blendenöffnungen 28 hinweg das Abgas durchleuchtet und über die hervorgerufene Abschwächung des Meßstrahls 24 ein Meßsignal ermittelt. Durch die leicht exzentrische Zuströmung des Abgases über das Zulaufrohr 14 in das Meßrohr 15 entsteht ein geringfügiger Drall, dessen Zentrum sich schraubenförmig um die Längsachse des Meßrohres 15 bewegt. Damit wird eine gleichmäßige Durchströmung der beiden Meßrohrhälften und zudem eine weitere Druckverringerung im Bereich der Blendenöffnungen 28 erreicht.

Von den Meßrohrenden 16 bzw. 17 gelangen die Teilströme in die Entlastungskammern 18 bzw. 19, wo die Abgasströme um 90 Grad umgelenkt werden. In den Entspannungskammern 18, 19 wird erreicht, daß sich die axiale Strömungsgeschwindigkeit der Teilströme wesentlich verlangsamt und somit auch der dynamische Abgasdruck auf die Blendenöffnungen 28 verringert. Durch die Ausbildung der Entspannungskammern 18, 19 wird ein gleichmäßiges Abströmen der Teilströme in allen Richtungen möglich, so daß der Strömungswiderstand gering gehalten wird und damit auch Ablagerungen möglichst vermieden werden. Begünstigt wird dies auch durch die große Austrittsöffnung 31, die relativ nahe zum Meßrohrende 16 liegt und unmittelbar in die Umgebung entlastet.

Im Inneren des Gehäuses 11 herrscht ein Überdruck, wie er zweckmäßigerweise von einem nicht näher gezeichneten Ventilator erzeugt werden kann, so daß über die Spülluftkanäle 21, 22 sich eine senkrecht zur Meßachse verlaufende Spülströmung ausbildet. Die Luftgeschwindigkeit in diesen Spülluftkanälen 21, 22 ist dabei so hoch, daß die Abgase zum überwiegenden Teil am Eintritt gehindert bzw. schon im Spülluftkanal fortgeblasen werden. Damit kann die geforderte Meßlänge 33 für verschiedene Abgasgeschwindigkeiten mit sehr geringer Fehlertoleranz eingehalten werden. Gleichzeitig wird auch eine Verschmutzung der optischen Meßköpfe 23, 25 vermieden. Günstig ist es dabei, wenn die Strömungsgeschwindigkeit in den Spülluftkanälen 21, 22 so festgelegt wird, daß die reine Spülluft die Abgase in den Entspannungskammern 18 bzw. 19 zurückdrängt. Dadurch läßt sich eine Verschmutzung der. Oberfläche der optischen Bauteile praktisch ausschließen. Zudem lassen sich Rußablagerungen in den abgasführenden Wegen vermeiden. Der Einfluß von geringen und hohen Abgasgeschwindigkeiten auf die optische Meßlänge 33 wird dadurch minimal gehalten. Besonders günstig ist auch, daß der Spülluftstrom parallel und gleichgerichtet zum Abgasstrom am Boden 29 austritt.

Die Vorrichtung 10 ermöglicht somit bei relativ einfacher und kompakter Bauweise einen wartungsarmen Betrieb mit erhöhter Genauigkeit und verbessertem Ansprechverhalten.

Selbstverständlichh sind an der gezeigten Ausführungsform Änderungen möglich, ohne vom Gedanken der Erfindung abzuweichen. So kann anstelle der gezeigten Einfachanordnung des Spülluftkanals 21 eine Mehrfachanordnung treten, bei der mehrere solcher Spülluftkanäle mit zugeordneten Blendenöffnungen nebeneinander angeordnet und in den Meßstrahl 24 geschaltet sind. Mit dieser Mehrfachanordnung der Spülluftkanäle läßt sich die Verschmutzungsgefahr der optischen Bauteile noch weiter senken. An den Größenverhältnissen der einzelnen Bauelemente sind selbstverständlich Änderungen möglich, ohne vom Gedanken der Erfindung abzuweichen. Auch kann die Austrittsöffnung 31 und die benachbarte Auslaßöffnung 32 im Boden 29 des Gehäuses 11 zusammengefaßt werden.

## Patentansprüche

1. Vorrichtung zur Messung der Trübung von Rauchgas, insbesondere zur Abgasuntersuchung von Dieselmotoren, mit einer Sendeeinrichtung (23) zur Erzeugung eines den Rauchgasstrom durchsetzenden Meßstrahles (24) und einer Empfangseinrichtung (25) zur Auswertung der durch die Rauchgastrübung hervorgerufenen Abschwächung des Meßstrahles (24), wobei der Meßstrahl (24) ein Meßrohr (15) durchdringt, dem in seinem mittleren Bereich über ein Zulaufrohr (14) das Rauchgas zugeführt wird, das sich im Meßrohr (15) in zwei zu den beiden Meßrohrenden (16, 17) hin gerichtete Teilströme aufteilt, die auf die vom Meßstrahl (24) durchsetzten Oberflächenbereiche von Sendeeinrichtung (23) und Empfangseinrichtung (25) gerichtet sind, die jeweils durch einen Spülluftstrom gegen Verschmutzung gesichert werden, wobei die beiden Enden (16, 17) des Meßrohrs (15) jeweils in eine Entspannungskammer (18, 19) münden, wobei jede der beiden Entspannungskammern (18, 19) an einer parallel zum Meßstrahl (24) liegenden Seite eine Austrittsöffnung (31) zur Umgebung hat und der Spülluftstrom durch mindestens einen Spülluftkanal (21, 22) geführt ist, der senkrecht zum Meßstrahl (24) zu einer Auslassöffnung (32) verläuft und dessen eine Begrenzungswand (26) die Entspannungskammer (18, 19) an ihrer dem Meßrohrende (16, 17) gegenüberliegenden Seite begrenzt und eine vom Meßstrahl (24) durchdrungene Blendenöffnung (28) aufweist.

2. Vorrichtung nach Anspruch 1, **dadurch gekennzeichnet, daß** die Zuströmung des Rauchgases über das Zulaufrohr (14) in das Meßrohr (15) relativ zur Achse des Meßrohrs (15) leicht exzentrisch ist.

3. Vorrichtung nach Anspruch 1 oder 2, **dadurch gekennzeichnet, daß** die Entspännungskammer (18, 19) einen Durchmesser aufweist, der mindestens doppelt so groß ist, wie der Durchmesser des Meßrohrs (15), vorzugsweise das Zwei-Fünffache von dessen Durchmesser beträgt.

4. Vorrichtung nach Anspruch 3, **dadurch gekennzeichnet, daß** die Entspannungskammer (18, 19) im wesentlichen gleichachsig zum Meßrohr (15) liegt und sich die Austrittsöffnung (31) über die gesamte Länge der Entspannungskammer (18, 19) in Richtung des Meßstrahls (24) erstreckt.

5. Vorrichtung nach einem der Ansprüche 1 bis 4, **dadurch gekennzeichnet, daß** die Entspannungskammer (18, 19) in Richtung des Meßstrahls gesehen einen U-förmigen Querschnitt aufweist, dessen Bogenabschnitt die Form eines Halbzylinders aufweist und dessen Schenkel die Austrittsöffnung (31) als rechteckige Form begrenzen, wie sie durch Projektion des Halbzylinders auf den Boden (29) des Gehäuses (11) entsteht, wobei die Schenkel von zwei parallelen Seitenflächen zwischen Zylindermantel des Halbzylinders und Austrittsöffnung (31) gebildet werden.

6. Vorrichtung nach einem der Ansprüche 1 bis 5, **dadurch gekennzeichnet, daß** der Durchmesser des Meßrohrs (15) mindestens doppelt so groß ist wie der Durchmesser der Blendenöffnung (28), vorzugsweise das Zwei- bis Dreifache von dessen Durchmesser beträgt.

7. Vorrichtung nach einem der Ansprüche 1 bis 6, **dadurch gekennzeichnet, daß** eine Mehrfachanordnung von zueinander parallel verlaufenden Spülluftkanälen vorgesehen ist, durch der Spülluft strom geführt ist.

8. Vorrichtung nach einem der Ansprüche 1 bis 7, **dadurch gekennzeichnet, daß** die Auslaßöffnungen (32) der Spülluftkanäle (21, 22) jeweils in einem Gehäuse (11) neben einer Austrittsöffnung (31) angeordnet sind und die Spülluftkanäle (21, 22) geradlinig geführt sind.

9. Vorrichtung nach einem der Ansprüche 1 bis 8, **dadurch gekennzeichnet, daß** die Sendeeinrichtung (23) und die Empfangseinrichtung (25) entgegengesetzt liegenden Enden (16, 17) des Meßrohrs (15) zugeordnet sind.

10. Vorrichtung nach einem der Ansprüche 1 bis 9, **dadurch gekennzeichnet, daß** in das Zulaufrohr (14) ein die Turbulenz des Abgasstromes erhöhendes Ventil (13) geschaltet ist.

11. Vorrichtung nach einem der Ansprüche 1 bis 10, **dadurch gekennzeichnet, daß** der Spülluftstrom in der Auslaßöffnung (32) gleichgerichtet ist zum Rauchgas in der Austrittsöffnung (31).

## Claims

1. Device for measuring the turbidity of smoke, in particular for testing the exhaust gas from diesel engines, having an emitter (23) for generating a measurement beam (24) which passes through the stream of smoke and a receiver (25) for evaluating the attenuation in the measurement beam (24) caused by the turbidity of the smoke, the measurement beam (24) penetrating through a measurement tube (15), to which the smoke is fed in its central region via an inlet tube (14), and the smoke is divided in the measurement tube (15) into two part-streams which are directed towards the two ends (16, 17) of the measurement tube and are directed onto the surface regions of emitter (23) and receiver (25) which are passed through by the measurement beam (24) and are each protected from contamination by a purge air stream, the two ends (16, 17) of the measurement tube (15) each opening out into an expansion chamber (18, 19), each of the two expansion chambers (18, 19) having an exit opening (31) to the environment on a side lying parallel to the measurement beam (24), and the purge air stream being passed through at least one purge air passage (21, 22) which runs perpendicular to the measurement beam (24) to an outlet opening (32) and a boundary wall (26) of which delimits the expansion chamber (18, 19) on its opposite side from the measurement tube end (16, 17) and has a diaphragm opening (28) which is penetrated by the measurement beam (24).

2. Device according to Claim 1, **characterized in that** the incoming flow of the smoke via the inlet tube (14) into the measurement tube (15) is slightly eccentric relative to the axis of the measurement tube (15).

3. Device according to Claim 1 or 2, **characterized in that** the expansion chamber (18, 19) has a diameter which is at least double the diameter of the measurement tube (15), and is preferably two to five times the diameter of the measurement tube (15).

4. Device according to Claim 3, **characterized in that** the expansion chamber (18, 19) is substantially coaxial with the measurement tube (15) and the exit opening (31) extends over the entire length of the expansion chamber (18, 19) in the direction of the measurement beam (24).

5. Device according to one of Claims 1 to 4, **characterized in that** the expansion chamber (18, 19), as seen in the direction of the measurement beam, has a U-shaped cross section, the bend part of which is in the shape of a half-cylinder and the limbs of which delimit the exit opening (31) as a rectangular shape, as is formed by projection of the half-cylinder onto the base (29) of the housing (11), the limbs being formed by two parallel side faces between cylinder lateral surfaces of the half-cylinder and exit opening (31).

6. Device according to one of Claims 1 to 5, **characterized in that** the diameter of the measurement tube (15) is at least double the diameter of the diaphragm opening (28), and is preferably two to three times the diameter of the diaphragm opening (28).

7. Device according to one of Claims 1 to 6, **characterized in that** a multiple arrangement of purge air passages running parallel to one another is provided, and the purge air stream is guided through this arrangement.

8. Device according to one of Claims 1 to 7, **characterized in that** the outlet openings (32) of the purge air passages (21, 22) are each arranged in a housing (11) next to an exit opening (31), and the purge air passages (21, 22) run in a straight line.

9. Device according to one of Claims 1 to 8, **characterized in that** the emitter (23) and the receiver (25) are assigned to opposite ends (16, 17) of the measurement tube (15).

10. Device according to one of Claims 1 to 9, **characterized in that** a valve (13) which increases the turbulence of the exhaust-gas stream is connected into the inlet tube (14).

11. Device according to one of Claims 1 to 10, **characterized in that** the purge air stream in the outlet opening (32) is oriented in the same direction as the smoke in the exit opening (31).

## Revendications

1. Dispositif de mesure de la turbidité des fumées, en particulier pour l'analyse des gaz d'échappement de moteurs Diesel, comprenant un émetteur (23) pour la génération d'un faisceau de mesure (24) traversant le flux des fumées, et un récepteur (25) pour l'exploitation de l'affaiblissement du faisceau de mesure (24) provoqué par la turbidité des fumées, le faisceau de mesure (24) traversant un tube de mesure (15) dans la zone centrale duquel sont acheminées les fumées par un tube d'arrivée (14), fumées qui se divisent dans le tube de mesure (15) en deux flux partiels orientés vers les deux extrémités du tube de mesure (16, 17) sur les zones de surface de l'émetteur (23) et du récepteur (25) traversées par le faisceau de mesure (24), les zones de surface étant sécurisées contre tout encrassement par un flux d'air de rinçage, les deux extrémités (16, 17) du tube de mesure (15) débouchant respectivement dans une chambre de détente (18, 19), chacune des deux chambres de détente (18, 19) possédant au niveau d'un côté situé parallèlement au faisceau de mesure (24) une ouverture de sortie (31) vers l'environnement et le flux d'air de rinçage étant guidé à travers au moins un canal d'air de rinçage (21, 22) qui s'étend perpendiculairement au faisceau de mesure (24) vers une ouverture de sortie (32) et dont une paroi (26) limite la chambre de détente (18, 19) au niveau de son côté opposé à l'extrémité du tube de mesure (16, 17) et présente une ouverture d'obturation (28) traversée par le faisceau de mesure (24).

2. Dispositif selon la revendication 1,
**caractérisé en ce que**
l'afflux des fumées par le tube d'arrivée (14) dans le tube de mesure (15) est légèrement excentré par rapport à son axe.

3. Dispositif selon la revendication 1 ou 2,
**caractérisé en ce que**
la chambre de détente (18, 19) présente un diamètre au moins deux fois supérieur à celui du tube de mesure (15), de préférence égal de deux fois à cinq fois son diamètre.

4. Dispositif selon la revendication 3,
**caractérisé en ce que**
la chambre de détente (18, 19) se trouve pour l'essentiel sur le même axe que le tube de mesure (15) et l'ouverture de sortie (31) s'étend sur la totalité de la longueur de la chambre de détente (18, 19) en direction du faisceau de mesure (24).

5. Dispositif selon l'une quelconque des revendications 1 à 4,
**caractérisé en ce que**
la chambre de détente (18, 19) présente, vue en direction du faisceau de mesure, une section transversale en forme de U, dont la partie courbe a la forme d'un demi-cylindre et dont les branches délimitent l'ouverture de sortie (31) en tant que forme rectangulaire telle qu'elle apparaît par projection du demi-cylindre sur le fond (29) du boîtier (11), les branches étant formées par deux surfaces latérales parallèles entre l'enveloppe cylindrique du demi-cylindre et l'ouverture de sortie (31).

6. Dispositif selon l'une quelconque des revendications 1 à 5,
**caractérisé en ce que**
le diamètre du tube de mesure (15) est au moins deux fois supérieur à celui de l'ouverture d'obturation (28), de préférence égal de deux fois à trois fois son diamètre.

7. Dispositif selon l'une quelconque des revendications 1 à 6,
**caractérisé en ce que**
de multiples canaux d'air de rinçage s'étendent parallèlement les uns aux autres à travers lesquels le flux d'air de rinçage est guidé.

8. Dispositif selon l'une quelconque des revendications 1 à 7,
**caractérisé en ce que**
les ouvertures de sortie (32) des canaux d'air de rinçage (21, 22) sont respectivement disposées dans un boîtier (11) à côté dune ouverture de sortie (31) et les canaux d'air de rinçage (21, 22) sont guidés de façon rectiligne.

9. Dispositif selon l'une quelconque des revendications 1 à 8,
**caractérisé en ce que**
l'émetteur (23) et le récepteur (25) sont associés aux extrémités opposées (16, 17) du tube de mesure (15).

10. Dispositif selon l'une quelconque des revendications 1 à 9,
**caractérisé en ce qu'**
une soupape (13) augmentant la turbulence du flux de gaz d'échappement est placée dans le tube d'arrivée (14).

11. Dispositif selon l'une quelconque des revendications 1 à 10,
**caractérisé en ce que**
le flux d'air de rinçage dans l'ouverture de sortie (32) est orienté dans la même direction que les fumées dans l'ouverture de sortie (31).
